# EUROPEAN PATENT SPECIFICATION

(11) **EP 0 721 432 B1**
(45) Date of publication and mention of the grant of the patent: **16.09.1998**
(21) Application number: 95924288.4
(22) Date of filing: 19.06.1995
(51) Int. Cl.: C03C 13/00, C03C 13/06

(54) **A MINERAL-FIBER COMPOSITION**
MINERALFASERZUSAMMENSETZUNG
COMPOSITION DE FIBRE MINERALE

(30) Priority: 02.08.1994 DE 4427368; 01.02.1995 DE 19503168
(43) Date of publication of application: 17.07.1996
(73) Proprietor: ISOVER SAINT-GOBAIN, 92400 Courbevoie (FR)
(72) Inventor: LOHE, Peter, D-67112 Mutterstadt (DE); HOLSTEIN, Wolfgang, D-35315 Homberg (DE); SCHWAB, Wolfgang, D-68723 Plankstadt (DE)
(74) Representative: Renous Chan, Véronique
(86) International application number: EP9502374
(87) International publication number: WO9604213

(56) References cited:
- EP-A- 0 459 897
- WO-A-92/09536
- FR-A- 2 690 438

## Description

The present invention relates to a mineral-fiber composition that is biologically degradable.

The prior art describes some mineral-fiber compositions which are said to be biologically degradable.

The biological degradability of mineral-fiber compositions is of great importance because various studies point out that mineral fibers with very small diameters in the range of less than 3 microns are suspected to be carcinogenic, while biologically degradable mineral fibers as such dimensions show no carcinogenicity.

However the mineral fiber compositions must also be easy to process by known methods for making mineral wool with a small diameter, in particular the jet process. This means in particular a sufficient processing range of for example 80°C and suitable viscosity of the glass melt.

Also, the mechanical and thermal properties of the mineral fibers, or the products produced therefrom, are of crucial importance. For example mineral fibers are used to a great extent for insulation purposes. Particularly for use in the industrial sector, sufficient temperature resistance of the mineral fibers is necessary.

The invention is based on the problem of providing a novel mineral-fiber composition that is characterized by biological degradability, has good temperature resistance and is easy to process.

The patent application FR-A-2 690 438 discloses mineral fiber compositions said to be biodegradable, which have all an amount in SiO₂ comprised between 52 and 65% by weight, and a certain amount in P₂O₅ said to enhance the biodegradability of the fibers.

The patent application WO-A-92-09536 discloses also mineral fiber compositions said to be soluble in biological fluids, which contain P₂O₅ presented as favourable toward biosolubility, according to the following relationship, in weight percentages :

P₂O₅ /Al₂O₃ + Fe₂O₃): between 0,4 to 6;

The patent application EP-A-459 897 discloses also mineral fiber compositions said to be soluble in a physiological medium, and which have a P₂O₅ amount comprised between 1 and 10% by weight and an alumina amount comprised between 4 and 14% by weight.

The patent application WO-93/22251 discloses also mineral fiber compositions said to be biodegradable, and which have an amount in Al₂O₃ comprised between 0 and 7% by weight, an amount in (Na₂O + K₂O) comprised between 1 and 6% by weight, P₂O₅ being used also so as to increase the biodegradability of the fibers.

The invention is based on the finding that this problem can be solved by a mineral fiber composition that consists substantially of silicon dioxide and alkaline earth oxides, and also contains sodium oxide, and possibly potassium oxide, as a melting accelerator and a sizeable amount of aluminium oxide to increase the temperature resistance.

It has turned out that such mineral fiber compositions fulfil the combination of the necessary properties, namely biological degradability, sufficient temperature resistance for insulated objects in industry, and good processibility for producing the mineral wool as such and the products. This means at the same time that the upper devitrification temperature of the melt is preferably under 1300°C. The mean fiber diameter is preferably 10 microns or less, and is in particular between 2.5 and 5 microns.

The objects of the invention is a mineral fiber composition that is biologically degradable, characterized by the following constituents in percent by weight :

| | |
|---|---|
| SiO₂ | 40 to less than 52 |
| Al₂O₃ | 1 to less than 4 |
| CaO | more than 25 and up to 45 |
| MgO | 5 to 15 |
| BaO | 0 to 7 |
| Na₂O | 2 to 12 |
| K₂O | 0 to 10 |
| Na₂O + K₂O | 2 to 15 |
| TiO₂, Fe₂O₃, MnO | 0 to 5 |

The inventive mineral fiber compositions are in particular easy to draw by the jet process, i.e. one obtains a fine, low-slug mineral wool.

The mineral fibers reach a high temperature resistance of at least 730°C.

The mineral fibers show high biological degradability.

The addition of sodium oxide and possibly potassium oxide lowers the melting point, thereby improving processibility in the melting process. Also, if the mineral-wool composition contains sodium it is advantageous to use up to 35% broken waste glass.

The inventive mineral fiber compositions can preferably be melted at melting temperatures of 1350 to 1450°C in melting chambers fired by fossil fuels, in particular natural gas. Such melting chambers can produce a homogeneous melt, which is the precondition for constant product quality. Homogeneity of the glass melt also facilitates reproducibility of the fiber forming process and thus the thermal and mechanical product properties. Furthermore, the constant chemical composition of the thus produced mineral wool leads to controllable biological degradability.

In particular the addition of aluminium oxide increases the temperature resistance of the mineral wool.

The inventive mineral fiber compositions preferably have the following constituents in percent by weight :

| | |
|---|---|
| SiO₂ | 40 to less than 51.5 |
| Al₂O₃ | 2 to less than 4 |
| CaO | 25.5 to 40 |
| MgO | 8 to 15 |
| BaO | 0 to 5 |
| Na₂O | 3 to 8 |
| K₂O | 2 to 10 |
| Na₂O + K₂O | 5 to 10 |
| TiO₂, Fe₂O₃, MnO | 0 to 3 |

A content of silicon oxide in the range of 40 to 55 percent by weight is particularly preferred.

With respect to the alkali oxides a range of 5 to 8 percent by weight is particularly preferred. Aluminium oxide is preferably present in a range between 3 and 4 percent by weight according to a first embodiment of the invention.

Barium oxide, which can be used like calcium or magnesium oxide, may be present in an amount up to 7 percent by weight, preferably up to 5 percent by weight, in particular 0.5 to 3 percent by weight.

Sodium oxide is preferably present in an amount of more than 2 percent by weight.

An aluminium oxide content between 1 and 2 percent by weight, in particular of 1.5 percent by weight, is preferably chosen according to a second embodiment of the invention.

The content of iron oxide (expressed as Fe₂O₃) is preferably 0.5 to 2.5 percent by weight.

To assess biological degradability the standard powder test of the German Glass Society was used. This is an easily conducted method and gives a sufficient measure of biological degradability when used with a simulated physiological lung fluid at 37°C. The method is described in L. Springer, « Laboratoriumsbuch für die Glasindustrie », 3rd edition, 1950, Halle/s : W. Knapp Verlag.

The temperature behaviour of the mineral fibers was determined by the « Swedish method ». In this method a silit tube furnace is used with a horizontal working tube open on both sides having a length of 350 mm and an inside diameter of 27 mm. In the center of the furnace there is a small ceramic supporting plate (30 X 20 X 3 mm) for holding the test sample. The test sample has dimensions of 12 X 12 X 12 mm or 12 mm ø X 12 mm height. The bulk density is normally 100 kg/m³. The temperature increase is 5 K/min. The change in test sample height is determined continuously with a reading optic.

The invention shall be described in more detail in the following with reference to examples.

### Example 1

A mineral wool was produced with the following composition in percent by weight:

| | |
|---|---|
| SiO₂ | 51 |
| Al₂O₃ | 3 |
| Fe₂O₃ | 0.3 |
| CaO | 31 |
| MgO | 10 |
| Na₂O | 5 |
| K₂O | 0.1. |

This composition could be processed well to mineral fibers with a mean diameter of 2.0 to 10 microns by the jet process at a drawing temperature between 1300 and 1400°C.

An investigation according to the standard powder test of the German Glass Society yielded a value of 40 mg/kg and thus a value for high biological degradability.

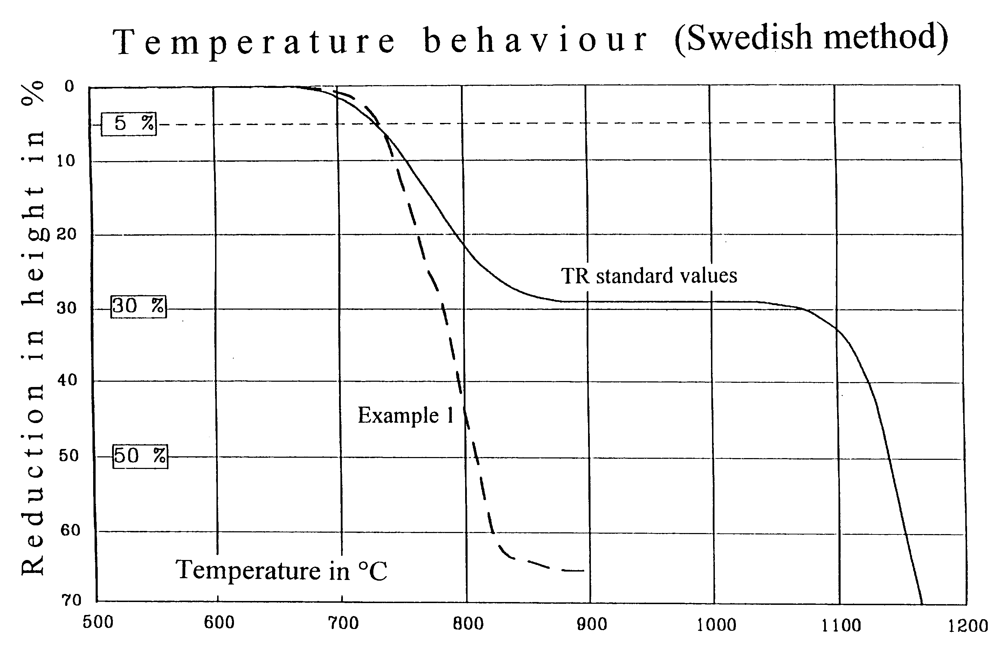

Determination of temperature behavior by the Swedish method yielded a temperature resistance at 5% reduction in height of 735°C, which can be clearly seen in the corresponding diagram shown by way of example in the single drawing.

### Example 2

A mineral wool was produced with the following composition in percent by weight:

| | |
|---|---|
| SiO₂ | 46.5 |
| Al₂O₃ | 3.5 |
| CaO | 35 |
| MgO | 10 |
| Na₂O | 5. |

This composition could also be processed well to mineral fibers with a mean diameter of 2.0 to 10 microns by the jet process at a drawing temperature between 1300 and 1400°C.

An investigation according to the standard powder test of the German Glass Society yielded a value of 35 mg/kg and thus a value for high biological degradability.

Determination of temperature behavior by the Swedish method yielded a temperature resistance at 5% reduction in height of 800°C.

This example shows that glass with a high aluminum oxide content has excellent temperature resistance, which is in turn a criterion for the fire resistance of the products.

### Example 3

A mineral wool was produced with the following composition in percent by weight:

| | |
|---|---|
| SiO₂ | 50 |
| Al₂O₃ | 2.8 |
| Fe₂O₃ | 0.9 |
| CaO | 25.6 |
| MgO | 9.7 |
| Na₂O | 4.9 |
| K₂O | 1.0 |
| BaO | 4.9. |

This composition could be processed well to mineral fibers with a mean diameter of 2.5 to 10 microns by the jet process at a drawing temperature between 1300 and 1400°C.

### Example 4

A mineral wool was produced with the following composition in percent by weight:

| | |
|---|---|
| SiO₂ | 51 |
| Al₂O₃ | 2.6 |
| Fe₂O₃ | 1.1 |
| CaO | 27.9 |
| MgO | 10.4 |
| Na₂O | 3.2 |
| K₂O | 0.6 |
| BaO | 3.1. |

This composition could be processed well to mineral fibers with a mean diameter of 2.5 to 10 microns by the jet process at a drawing temperature between 1300 and 1400°C.

### Example 5

A mineral wool was produced with the following composition in percent by weight:

| | |
|---|---|
| SiO₂ | 50.9 |
| Al₂O₃ | 2.6 |
| Fe₂O₃ | 1.1 |
| CaO | 30 |
| MgO | 10.4 |
| Na₂O | 2.2 |
| K₂O | 1.6 |
| BaO | 1.1. |

This composition could be processed well to mineral fibers with a mean diameter of 2.5 to 10 microns by the jet process at a drawing temperature between 1300 and 1400°C.

## Claims

1. A mineral-fiber composition that is biologically degradable, ***characterized by*** the following constituents in percent by weight :
| | |
|---|---|
| SiO₂ | 40 to less than 52 |
| Al₂O₃ | 1 to less than 4 |
| CaO | more than 25 and up to 45 |
| MgO | 5 to 15 |
| BaO | 0 to 7 |
| Na₂O | 2 to 12 |
| K₂O | 0 to 10 |
| Na₂O + K₂O | 2 to 15 |
| TiO₂, Fe₂O₃, MnO | 0 to 5 |

2. The mineral-fiber composition of claim 1, ***characterized by*** the following constituents in percent by weight :
| | |
|---|---|
| SiO₂ | 40 to 51,5 |
| Al₂O₃ | 2 to less than 4 |
| CaO | 25.5 to 40 |
| MgO | 8 to 15 |
| BaO | 0 to 5 |
| Na₂O | 3 to 8 |
| K₂O | 2 to 10 |
| Na₂O + K₂O | 5 to 10 |
| TiO₂, Fe₂O₃, MnO | 0 to 3 |

3. The mineral-fiber composition of claim 1 or 2, ***characterized in that*** the alkali oxides are present in an amount of 5 to 8 percent by weight.

4. the mineral-fiber composition of any of claims 1 to 3, ***characterized in that*** aluminum oxide is present in a content between 3 and 4 percent by weight.

5. The mineral-fiber composition of claim 1, ***characterized in that*** aluminum oxide is present in a content between 1 and 2 percent by weight, in particular 1,5 percent by weight.

6. The mineral-fiber composition of any of claims 1 to 5, ***characterized in that*** the content of iron oxide (expressed as Fe₂O₃) is 0,5 to 2,5 percent by weight.

7. The mineral-flber composition of any of claims 1 to 6, ***characterized in that*** the content of barium oxide is O to 5 percent by weight, preferably 0,5 to 4 percent by weight, notably 0,5 to 3 percent by weight.

8. The mineral-fiber composition of any of claims 1 to 4 or 5 to 7, ***characterized by*** the following components :
| | |
|---|---|
| SiO₂ | 51 |
| Al₂O₃ | 3 |
| Fe₂O₃ | 0.3 |
| CaO | 31 |
| MgO | 10 |
| Na₂O | 5 |
| K₂O | 0.1 |

9. The mineral-fiber composition of any of claims 1 to 4 or 5 to 7, ***characterized by*** the following components, in percent by weight :
| | |
|---|---|
| SiO₂ | 46,5 |
| Al₂O₃ | 3.5 |
| CaO | 35 |
| MgO | 10 |
| Na₂O | 5 |

10. The mineral-fiber composition of any of claims 1 to 4 or 5 to 7, ***characterized by*** the following components, in percent by weight :
| | |
|---|---|
| SiO₂ | 50 |
| Al₂O₃ | 2,8 |
| Fe₂O₃ | 0.9 |
| CaO | 25,6 |
| MgO | 9,7 |
| Na₂O | 4,9 |
| K₂O | 1,0 |
| BaO | 4,9 |

11. The mineral-fiber composition of any of claims 1 to 4 or 5 to 7, ***characterized by*** the following components, in percent by weight :
| | |
|---|---|
| SiO₂ | 51 |
| Al₂O₃ | 2,6 |
| Fe₂O₃ | 1,1 |
| CaO | 27,9 |
| MgO | 10,4 |
| Na₂O | 3,2 |
| K₂O | 0,6 |
| BaO | 3,1 |

12. The mineral-fiber composition of any of claims 1 to 4 or 5 to 7, ***characterized by*** the following components, in percent by weight :
| | |
|---|---|
| SiO₂ | 50,9 |
| Al₂O₃ | 2,6 |
| Fe₂O₃ | 1,1 |
| CaO | 30 |
| MgO | 10,4 |
| Na₂O | 2,2 |
| K₂O | 1,6 |
| BaO | 1,1 |

13. Process to manufacture mineral fibres ***characterized in that*** it uses up to 35% broken waste glass and that the fibres have a composition according to any of the preceding claims.

## Patentansprüche

1. Biologisch abbaubare Mineralfaserzusammensetzung, gekennzeichnet durch die folgenden, in Gewichtsprozent angegebenen Bestandteile:
| | |
|---|---|
| SiO₂ | 40 bis unter 52 |
| Al₂O₃ | 1 bis unter 4 |
| CaO | über 25 und bis 45 |
| MgO | 5 bis 15 |
| BaO | 0 bis 7 |
| Na₂O | 2 bis 12 |
| K₂O | 0 bis 10 |
| Na₂O + K₂O | 2 bis 15 |
| TiO₂, Fe₂O₃, MnO | 0 bis 5. |

2. Mineralfaserzusammensetzung nach Anspruch 1, gekennzeichnet durch die folgenden, in Gewichtsprozent angegebenen Bestandteile:
| | |
|---|---|
| SiO₂ | 40 bis 51,5 |
| Al₂O₃ | 2 bis unter 4 |
| CaO | 25,5 bis 40 |
| MgO | 8 bis 15 |
| BaO | 0 bis 5 |
| Na₂O | 3 bis 8 |
| K₂O | 2 bis 10 |
| Na₂O + K₂O | 5 bis 10 |
| TiO₂, Fe₂O₃, MnO | 0 bis 3. |

3. Mineralfaserzusammensetzung nach Anspruch 1 oder 2, dadurch gekennzeichnet, daß die Alkalioxide in einer Menge von 5 bis 8 Gewichtsprozent vorliegen.

4. Mineralfaserzusammensetzung nach einem der Ansprüche 1 bis 3, dadurch gekennzeichnet, daß Aluminiumoxid in einem Gehalt zwischen 3 und 4 Gewichtsprozent vorliegt.

5. Mineralfaserzusammensetzung nach Anspruch 1, dadurch gekennzeichnet, daß Aluminiumoxid in einem Gehalt zwischen 1 und 2 Gewichtsprozent, insbesondere 1,5 Gewichtsprozent, vorliegt.

6. Mineralfaserzusammensetzung nach einem der Ansprüche 1 bis 5, dadurch gekennzeichnet, daß der Eisenoxidgehalt (ausgedrückt als Fe₂O₃) 0,5 bis 2,5 Gewichtsprozent beträgt.

7. Mineralfaserzusammensetzung nach einem der Ansprüche 1 bis 6, dadurch gekennzeichnet, daß der Bariumoxidgehalt 0 bis 5 Gewichtsprozent, bevorzugt 0,5 bis 4 Gewichtsprozent, insbesondere 0,5 bis 3 Gewichtsprozent, beträgt.

8. Mineralfaserzusammensetzung nach einem der Ansprüche 1 bis 4 oder 5 bis 7, gekennzeichnet durch die folgenden Komponenten:
| | |
|---|---|
| SiO₂ | 51 |
| Al₂O₃ | 3 |
| Fe₂O₃ | 0,3 |
| CaO | 31 |
| MgO | 10 |
| Na₂O | 5 |
| K₂O | 0,1. |

9. Mineralfaserzusammensetzung nach einem der Ansprüche 1 bis 4 oder 5 bis 7, gekennzeichnet durch die folgenden Komponenten:
| | |
|---|---|
| SiO₂ | 46,5 |
| Al₂O₃ | 3,5 |
| CaO | 35 |
| MgO | 10 |
| Na₂O | 5. |

10. Mineralfaserzusammensetzung nach einem der Ansprüche 1 bis 4 oder 5 bis 7, gekennzeichnet durch die folgenden Komponenten:
| | |
|---|---|
| SiO₂ | 50 |
| Al₂O₃ | 2,8 |
| Fe₂O₃ | 0,9 |
| CaO | 25,6 |
| MgO | 9,7 |
| Na₂O | 4,9 |
| K₂O | 1,0 |
| BaO | 4,9. |

11. Mineralfaserzusammensetzung nach einem der Ansprüche 1 bis 4 oder 5 bis 7, gekennzeichnet durch die folgenden Komponenten:
| | |
|---|---|
| SiO₂ | 51 |
| Al₂O₃ | 2,6 |
| Fe₂O₃ | 1,1 |
| CaO | 27,9 |
| MgO | 10,4 |
| Na₂O | 3,2 |
| K₂O | 0,6 |
| BaO | 3,1. |

12. Mineralfaserzusammensetzung nach einem der Ansprüche 1 bis 4 oder 5 bis 7, gekennzeichnet durch die folgenden Komponenten:
| | |
|---|---|
| SiO₂ | 50,9 |
| Al₂O₃ | 2,6 |
| Fe₂O₃ | 1,1 |
| CaO | 30 |
| MgO | 10,4 |
| Na₂O | 2,2 |
| K₂O | 1,6 |
| BaO | 1,1. |

13. Verfahren zur Herstellung von Mineralfasern, dadurch gekennzeichnet, daß man bis zu 35% Altglasscherben einsetzt und die Fasern eine Zusammensetzung gemäß einem der vorhergehenden Ansprüche aufweisen.

## Revendications

1. Composition de fibres minérales qui est dégradable biologiquement, **caractérisée par** les constituants suivants, en pourcentages pondéraux:
| | |
|---|---|
| SiO₂ | 40 à moins de 52 |
| Al₂O₃ | 1 à moins de 4 |
| CaO | plus de 25 et jusqu'à 45 |
| MgO | 5 à 15 |
| BaO | 0 à 7 |
| Na₂O | 2 à 12 |
| K₂O | 0 à 10 |
| Na₂O + K₂O | 2 à 15 |
| TiO₂, Fe₂O₃, MnO | 0 à 5 |

2. Composition de fibres minérales selon la revendication 1, **caractérisée par** les constituants suivants, en pourcentages pondéraux:
| | |
|---|---|
| SiO₂ | 40 à 51,5 |
| Al₂O₃ | 2 à moins de 4 |
| CaO | 25,5 à 40 |
| MgO | 8 à 15 |
| BaO | 0 à 5 |
| Na₂O | 3 à 8 |
| K₂O | 2 à 10 |
| Na₂O + K₂O | 5 à 10 |
| TiO₂, Fe₂O₃, MnO | 0 à 3 |

3. Composition de fibres minérales selon la revendication 1 ou 2, **caractérisée en ce que** les oxydes alcalins sont présents dans une proportion de 5 à 8 pour cent en poids.

4. Composition de fibres minérales selon l'une quelconque des revendications 1 à 3, **caractérisée en ce que** l'oxyde d'aluminium est présent dans une proportion comprise entre 3 et 4 pour cent en poids.

5. Composition de fibres minérales selon la revendication 1, **caractérisée en ce que** l'oxyde d'aluminium est présent dans une proportion comprise entre 1 et 2 pour cent en poids, en particulier à raison de 1,5 pour cent en poids.

6. Composition de fibres minérales selon l'une quelconque des revendications 1 à 5, **caractérisée en ce que** la teneur en oxyde de fer (exprimée en Fe₂O₃) est de 0,5 à 2,5 pour cent en poids.

7. Composition de fibres minérales selon l'une quelconque des revendications 1 à 6, **caractérisée en ce que** la teneur en oxyde de baryum est de 0 à 5 pour cent en poids, de préférence de 0,5 à 4 pour cent en poids, tout particulièrement de 0,5 à 3 pour cent en poids.

8. Composition de fibres minérales selon l'une quelconque des revendications 1 à 4 ou 5 à 7, **caractérisée par** les constituants suivants:
| | |
|---|---|
| SiO₂ | 51 |
| Al₂O₃ | 3 |
| Fe₂O₃ | 0,3 |
| CaO | 31 |
| MgO | 10 |
| Na₂O | 5 |
| K₂O | 0,1 |

9. Composition de fibres minérales selon l'une quelconque des revendications 1 à 4 ou 5 à 7, **caractérisée par** les constituants suivants, en pourcentages pondéraux:
| | |
|---|---|
| SiO₂ | 46,5 |
| Al₂O₃ | 3,5 |
| CaO | 35 |
| MgO | 10 |
| Na₂O | 5 |

10. Composition de fibres minérales selon l'une quelconque des revendications 1 à 4 ou 5 à 7, **caractérisée par** les constituants suivants, en pourcentages pondéraux:
| | |
|---|---|
| SiO₂ | 50 |
| Al₂O₃ | 2,8 |
| Fe₂O₃ | 0,9 |
| CaO | 25,6 |
| MgO | 9,7 |
| Na₂O | 4,9 |
| K₂O | 1,0 |
| BaO | 4,9 |

11. Composition de fibres minérales selon l'une quelconque des revendications 1 à 4 ou 5 à 7, **caractérisée par** les constituants suivants, en pourcentages pondéraux:
| | |
|---|---|
| SiO₂ | 51 |
| Al₂O₃ | 2,6 |
| Fe₂O₃ | 1,1 |
| CaO | 27,9 |
| MgO | 10,4 |
| Na₂O | 3,2 |
| K₂O | 0,6 |
| BaO | 3,1 |

12. Composition de fibres minérales selon l'une quelconque des revendications 1 à 4 ou 5 à 7, **caractérisée par** les constituants suivants, en pourcentages pondéraux:
| | |
|---|---|
| SiO₂ | 50,9 |
| Al₂O₃ | 2,6 |
| Fe₂O₃ | 1,1 |
| CaO | 30 |
| MgO | 10,4 |
| Na₂O | 2,2 |
| K₂O | 1,6 |
| BaO | 1,1 |

13. Procédé de fabrication de fibres minérales, **caractérisé en ce qu'il** utilise jusqu'à 35% de déchets de verre cassé et en ce que les fibres ont une composition selon l'une quelconque des revendications précédentes.
